# EUROPEAN PATENT APPLICATION

(11) **EP 4 718 115 A1**
(43) Date of publication of application: **01.04.2026**
(21) Application number: 25194956.6
(22) Date of filing: 08.08.2025
(51) Int. Cl.: G01S 13/76, G01S 13/91, G01S 13/933, G01S 13/78

(54) **ALLY TRANSPONDER FOR ASSISTED NAVIGATION**

(30) Priority: 30.09.2024 US 202463701444 P; 14.05.2025 US 202519208292
(71) Applicant: The Boeing Company, Arlington, VA 22202 (US)
(72) Inventor: SHAPOURY, Alireza, Arlington, 22202 (US)
(74) Representative: Boult Wade Tennant LLP

(57) **Abstract**

A device includes a receive antenna configured to receive a radar signal. The device includes a return signal generator configured to generate a return signal based on the received radar signal. The return signal includes at least a first component at a first frequency offset from a carrier frequency of the received radar signal and a second component at a second frequency offset from the carrier frequency. The device also includes a transmit antenna configured to transmit the return signal.

## Description

### FIELD OF THE DISCLOSURE

The present disclosure is generally related to sending and receiving radar signals.

### BACKGROUND

In flight applications, such as Urban Air Mobility, the need for accurate navigation to vertiports is increasing, especially in areas with unreliable or compromised satellite navigation system signals, such a global positioning system (GPS) signals. Air taxi platforms such as autonomous electric vertical take-off and landing (eVTOL) aircraft are typically compact, lightweight structures with limited sensor capacity due to potential interference and space constraints, lacking a metallic ground plane for interference mitigation. These challenges highlight the need for a versatile sensor solution.

### SUMMARY

Some examples of the subject matter disclosed in detail below relate to a device that includes a receive antenna configured to receive a radar signal. The device includes a return signal generator configured to generate a return signal based on the received radar signal. The return signal includes at least a first component at a first frequency offset from a carrier frequency of the received radar signal, and a second component at a second frequency offset from the carrier frequency. The device also includes a transmit antenna configured to transmit the return signal.

Other examples of the subject matter disclosed in detail below relate to a method that includes receiving, at a device, a radar signal. The method includes generating, at the device, a return signal based on the received radar signal. The return signal includes at least a first component at a first frequency offset from a carrier frequency of the received radar signal, and a second component at a second frequency offset from the carrier frequency. The method also includes transmitting, at the device, the return signal.

Still other examples of the subject matter disclosed in detail below relate to an aircraft that includes a radar system. The radar system includes a transmit antenna configured to transmit a radar signal. The radar system includes a receive antenna configured to receive a return signal that corresponds to the radar signal and that includes a first component at a first frequency offset from a carrier frequency of the radar signal and a second component at a second frequency offset from the carrier frequency. The radar system also includes a radar return analyzer configured to identify a landing location, based at least on detection of the first component and the second component. The aircraft also includes a navigation system coupled to the radar system and configured to generate a navigation instruction based on the identified landing location.

The features, functions, and advantages described herein can be achieved independently in various examples or may be combined in yet other examples, further details of which can be found with reference to the following description and drawings.

### BRIEF DESCRIPTION OF THE DRAWINGS

FIG. 1 is a diagram that illustrates a system that includes an ally transponder,.
FIG. 2 is a diagram of a vertiport that includes the ally transponder of FIG. 1 disclosure.
FIG. 3 is a diagram of components and operations that may be implemented in the system of FIG. 1.
FIG. 4 is an example of a radar tracking diagram for a radar source and the ally transponder of FIG. 1.
FIG. 5 is a diagram of an aircraft that may be included in the system of FIG. 1.
FIG. 6 is a flowchart illustrating an example of a method of operating an ally transponder in the system of FIG. 1.
FIG. 7 is a block diagram of a computing environment including a computing device configured to support features of computer-implemented methods and computer-executable program instructions (or code).

### DETAILED DESCRIPTION

Examples disclosed herein present systems and methods for assisted navigation using an ally transponder. In flight applications, such as Urban Air Mobility, the need for accurate navigation to vertiports is increasing, especially in areas with unreliable or compromised GPS signals. Air taxi platforms such as eVTOL are typically compact, lightweight structures with limited sensor capacity due to potential interference and space constraints, lacking a metallic ground plane for interference mitigation. These challenges highlight the need for a versatile sensor solution.

As detect and avoid (DAA) technology evolves into commercially important and/or necessary sensor solutions, and transitions to a design assurance level A and/or level B (DAL A/B) solution, expanding its capabilities to include tasks like precision landing becomes more achievable, leveraging its strengths and simplified certification process. According to some examples, the present techniques extend the use of DAA airborne radars, for landing purposes, over ground clutter which is challenging to resolve.

In accordance with some examples, an ally transponder introduces a unique approach by replicating a received waveform from an airborne radar while incorporating two distinct doublet Doppler shifts - one positive and one negative. In some examples, this technique simulates the presence of both inbound and outbound flying objects simultaneously at the same location, with matching radar cross-section (RCS) values and predefined speeds. In some examples, the ally transponder additionally introduces a predetermined delay in the return signal that replicates a relative distance offset between a location of the ally transponder and the apparent location of the inbound and outbound flying objects, enabling the ally transponder to be detectable even when the ally transponder is within a radar blind range of an aircraft, such as during the final stages of landing.

According to some examples, the present techniques enhance landing precision in challenging environments, surpassing traditional systems. Additionally, generating an adjustable RCS through signal amplification allows for compact form factor implementation. According to some examples, relative simplicity of circuitry of the ally transformer facilitates certifiability, analysis of availability, and integrity with relatively few hardware components.

According to some examples, the disclosed techniques extend the use of Frequency Modulated Continuous Wave (FMCW) DAA airborne radars for landing purposes. Although airborne radars are not specifically designed to handle ground clutter, this approach involves use of a specialized transponder that can provide unique signatures corresponding to a specific landing site. An advantage of this design is its simplicity, which allows for easier certification, cost-effective implementation, and low setup and maintenance expenses. The transponder can emit the same waveform as the airborne radar but with predefined two Doppler shifts, one positive and one negative. By utilizing this transponder technology, the precise and reliable landing capabilities are enabled for air taxi platforms, even in challenging GPS-denied or compromised environments.

According to some examples, the disclosed techniques provide precision relative navigation that can be implemented in a variety of airframes including airframes with limited available space and formed of composite materials. The disclosed transponder solution, with its simplicity of design, offers a more cost-effective alternative to conventional techniques. It can be implemented at a lower cost and with easier certification cycles, reducing setup expenses and maintenance requirements. This solution further allows for more reliable and precise landing capabilities, even in challenging environments where traditional landing systems may struggle.

According to some examples, the ally transponder at a fixed location near a vertiport can generate predefined Doppler shifts of a received signal from an airborne radar, beyond the operational flight envelope and below the radar ambiguous Doppler range, and transmits the signal back to the airborne radar.

According to some examples, the disclosed techniques include a specialized transponder that emits unique signatures corresponding to a specific landing site and is designed to work in conjunction with FMCW airborne radar. This differs from prior solutions that may rely on different transponder technologies or may not specifically address the need for landing site signatures. Thus, the use of FMCW (Frequency Modulated Continuous Wave) detect and avoid (DAA) can be extended for airborne radars for landing purposes in the context of Urban Air Mobility.

According to some examples, the disclosed techniques can be applied to pulsed radars, allowing for the imitation of predefined Doppler and altitude values beyond the operational flight regime. These predefined values can be dynamically adjusted based on factors such as time and geographic location. For instance, different values can be provided at different times of the day. This feature not only aids in vertiport identification but also helps reduce unintentional jamming. To enhance the effectiveness of the system, the rate of Doppler injection can be adjusted within certain margins. This allows for further differentiation between the ally transponder and background clutter. The rate of Doppler injection can be ramped up or down, providing a means to distinguish between desired signals and unwanted interference. By incorporating these capabilities, the approach offers improved versatility and adaptability for pulsed radars. It enables the system to emulate predefined Doppler and altitude values beyond the operational flight regime, while also providing flexibility in adjusting the injection rate to optimize performance and minimize interference.

Specific examples are illustrated in the figures and the following description. All of the figures are covered by the present solution with features common across the various figures. The figures include multiple examples of different types of systems, devices, and operations that are possible in conjunction with the present solution. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims and their equivalents.

Particular examples are described herein with reference to the drawings. In the description, common features are designated by common reference numbers throughout the drawings.

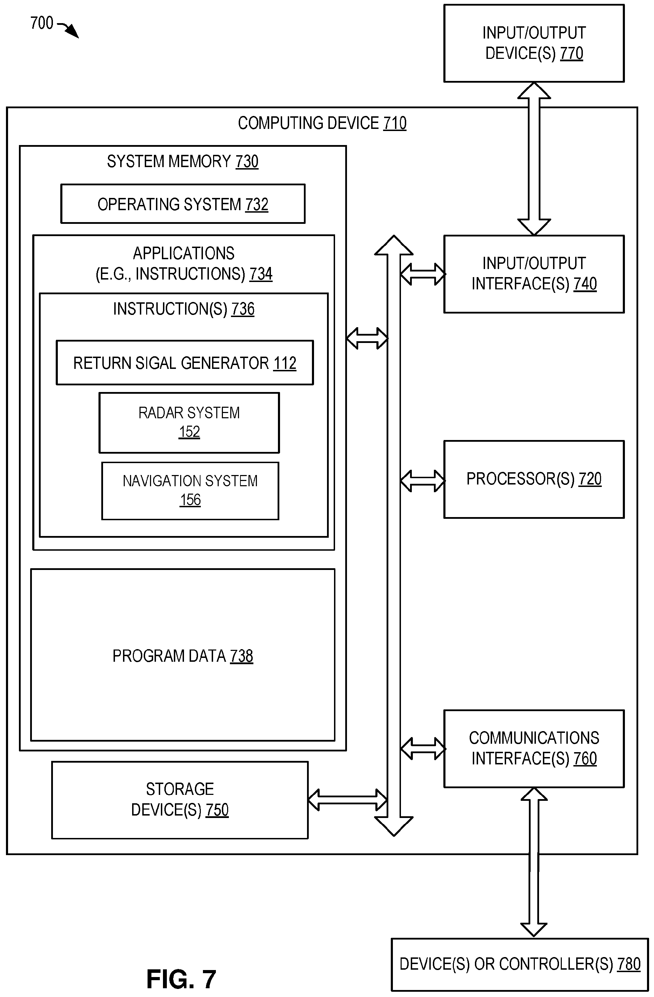

As used herein, various terminology is used for the purpose of describing particular examples and is not intended to be limiting. For example, the singular forms "a," "an," and "the" are intended to include the plural forms as well, unless the context clearly indicates otherwise. Further, some features described herein can be singular or plural. To illustrate, FIG. 7 depicts a device including one or more processors ("processor(s)" 720 in FIG. 7), which indicates that the device may include a single processor 720 or may include multiple processors 720. For ease of reference herein, such features are generally introduced as "one or more" features, and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "obtaining," "generating," "calculating," "using," "selecting," "accessing," and "determining" are interchangeable unless context indicates otherwise. For example, "obtaining," "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, a device that is "configured to" perform an operation includes dedicated circuitry, hardware, or other components that enable the operation to be performed by the device. As an example, programming of a general purpose processor with instructions that, when executed by the processor, cause the processor to perform a particular operation results in a special-purpose processor that is configured to perform that particular operation. A device can be configured to perform multiple operations. A device that is configured to perform an operation does not necessarily exclude the device from being configured to perform other operations.

As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

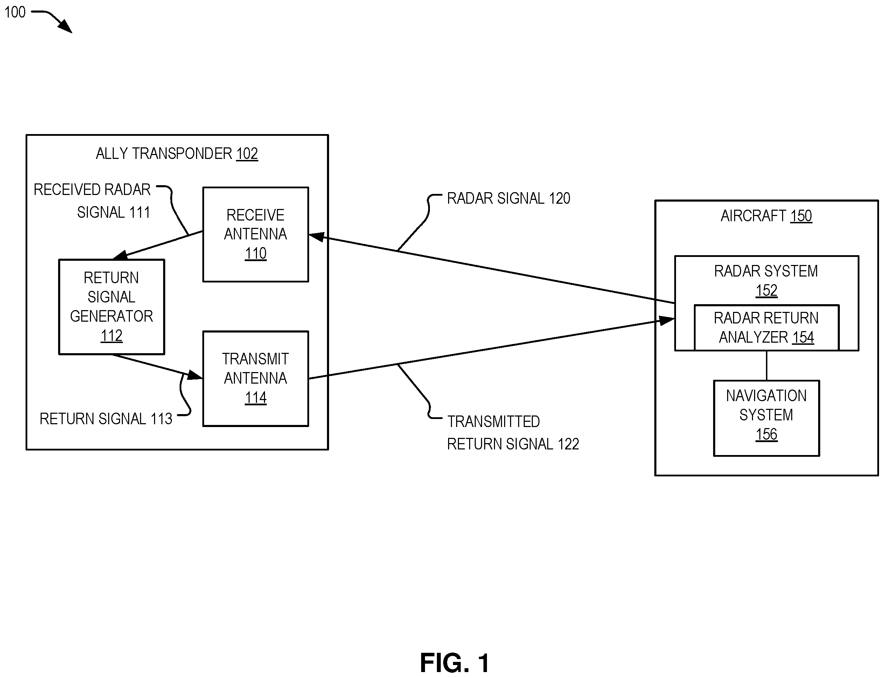

Referring to FIG. 1, a system 100 is illustrated including components associated with aircraft navigation, such as in an Urban Air Mobility application. The system 100 includes a device, illustrated as an ally transponder 102, that includes a receive antenna 110, a return signal generator 112, and a transmit antenna 114. The system 100 also includes an aircraft 150 that includes a radar system 152 coupled to a navigation system 156.

The receive antenna 110 is configured to receive a radar signal 120 from the radar system 152 of the aircraft 150. The return signal generator 112 is configured to generate a return signal 113 based on a received radar signal 111 (e.g., a filtered and/or amplified version of the radar signal 120). The return signal 113 includes at least a first component at a first frequency offset from a carrier frequency of the received radar signal 111 and a second component at a second frequency offset from the carrier frequency. The transmit antenna 144 is configured to transmit the return signal 113, illustrated as a transmitted return signal 122.

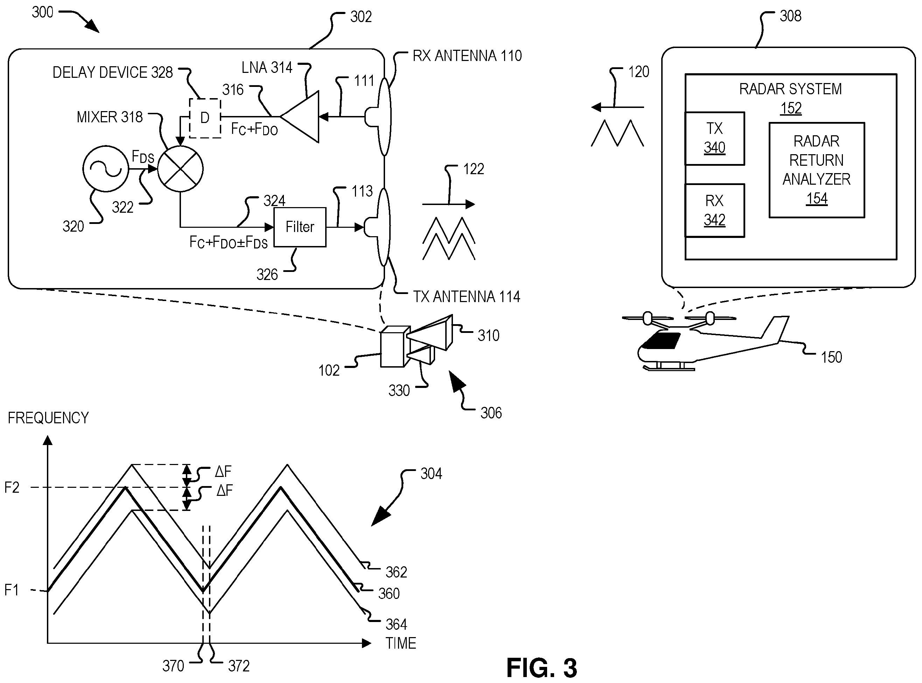

According to some examples, the first frequency offset and the second frequency offset have matching magnitudes and opposite signs, such as described in further detail with reference to FIG. 3. According to some examples, the first frequency offset and the second frequency offset are within a threshold range from the carrier frequency. In some examples, the first component emulates a first Doppler signature of a first object traveling toward a source of the radar signal 120 at a first speed, and the second component emulates a second Doppler signature of a second object traveling away from the source of the radar signal 120 at a second speed that matches or substantially matches the first speed. According to some examples, the return signal generator 112 includes a mixer configured to mix the received radar signal 111 with a mixing signal to generate the return signal 113, where the mixing signal includes a component having a frequency that matches or substantially matches the first frequency offset and the second frequency offset, such as described further with reference to FIG. 3.

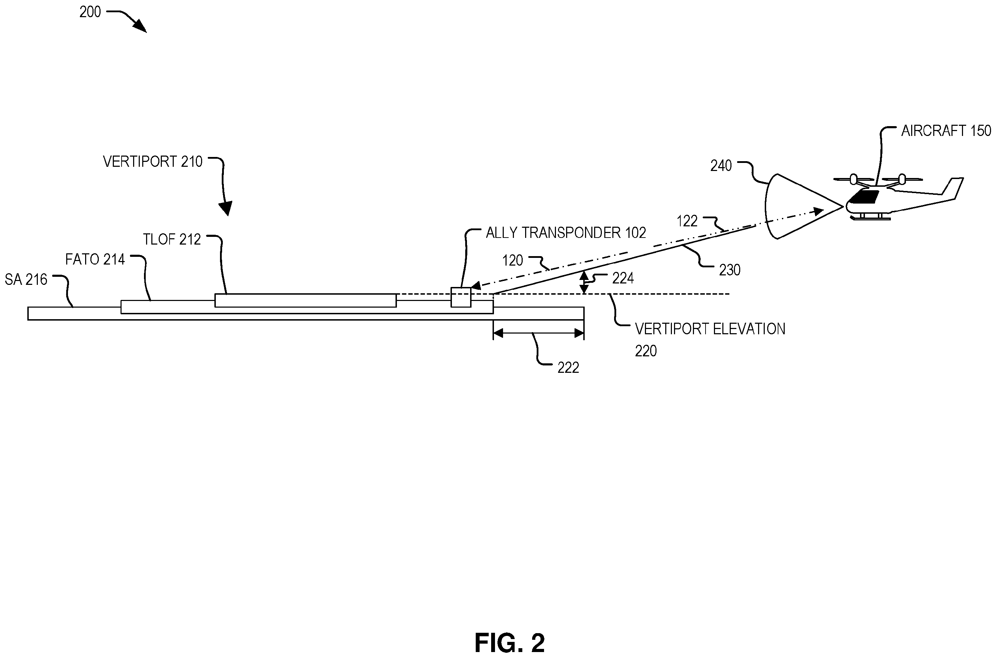

According to some examples, the ally transponder 102 is configured to indicate a landing location for an autonomous aircraft, such as illustrated in FIG. 2. The combination of the first component and the second component included in the return signal 113 can operate as a unique identifier corresponding to the landing location. In some examples, the return signal 113 includes a pattern (e.g., based on frequency allocation, time allocation, or another characteristic in a frequency and/or time domain) that uniquely identifies the ally transponder 102.

According to some examples, the radar system 152 of the aircraft 150 includes a radar return analyzer 154 that is configured to identify a landing location transponder (e.g., the ally transponder 102) based on detection of the first component and the second component in the transmitted return signal 122. The navigation system 156 is coupled to the radar system 152 and configured to generate a navigation instruction 158 based on the identified landing location. For example, the navigation instruction 158 may be generated by a flight computer and presented to one or more operators or pilots of the aircraft 150, or may be provided to an autopilot system or an autonomous aircraft operations system to control operation of the aircraft 150, or both.

FIG. 2 depicts a particular example 200 of a landing location, illustrated as a vertiport 210, that includes the ally transponder 102. The vertiport 210 includes a touchdown and lift-off (TLOF) area 212, a final approach and takeoff (FATO) area 214, and a safety area (SA) 216.

The ally transponder 102 is located in the FATO 214 and is configured to receive a radar signal 120 from the aircraft 150 and transmit a return signal 122 that is based on the received radar signal (e.g., based on a filtered and/or amplified version of the radar signal 120). The transmitted return signal 122 includes at least a first component at a first frequency offset from a carrier frequency of the received radar signal 120 and a second component at a second frequency offset from the carrier frequency, as described further with reference to FIG. 3.

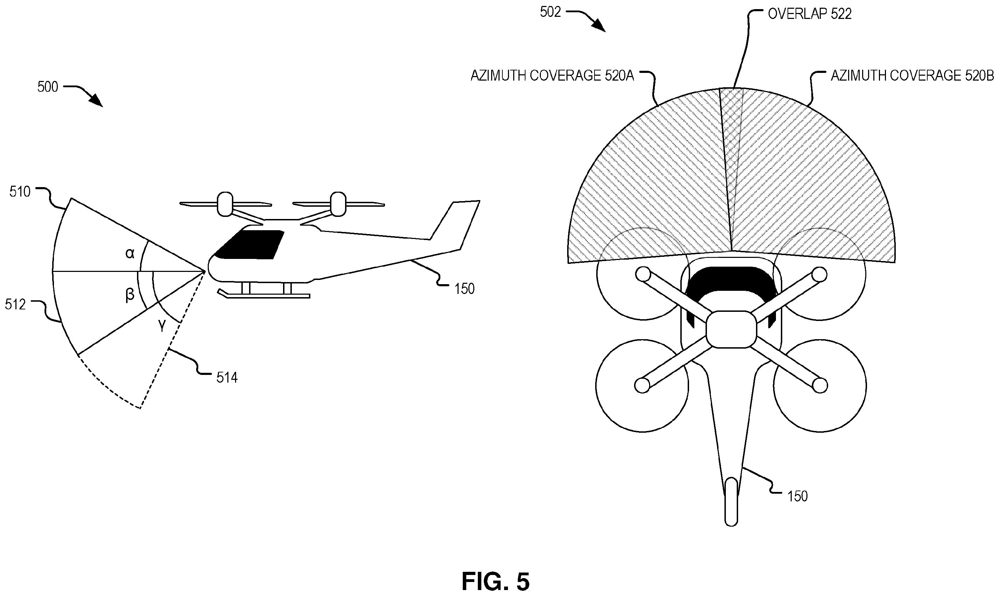

The aircraft 150 is configured to transmit the radar signal 120 and receive and analyze the return signal 122 in conjunction with a DAA system. In some examples, the radar system 152 of the aircraft 150 is configured to provide an elevation coverage, graphically depicted as circular segment 240, to receive return signals within a range of elevation angles that spans from above the longitudinal axis of the aircraft 150 to below the longitudinal axis of the aircraft 150. In some non-limiting examples, the coverage can be determined based on one or more applicable standards or guidelines, such as similar to a Radio Technical Commission for Aeronautics (RTCA) specification for DAA systems (e.g., DO-366). An illustrative example of elevation and azimuth coverage for a DAA system that can be used in conjunction with the ally transponder 102 is described in further detail with reference to FIG. 5.

The ally transponder 102 enables the aircraft 150 to pinpoint a landing location, e.g., the TLOF 212, with precision. In particular, the transmitted return signal 122 received at the aircraft 150 provides a distinctive signature that distinguishes the ally transponder 102 from any other objects that may be around the vertiport 210.

In some examples, the ally transponder 102 is oriented such that a direction of propagation of the transmitted return signal 122 is elevated to reduce reflections from nearby objects. As illustrated, a height 224 above the vertiport elevation 220 indicates a minimum height clearance around the SA 216, at a distance 222 from the FATO 214, which may correspond to a minimum slope 230 for an approach path. In some illustrative, non-limiting examples, the height 224 can correspond to 3.15 feet or approximately 3.125 feet (0.95 m or approximately 0.95 m), at a distance 222 of 25 feet or approximately 25 feet (7.6 m or approximately 7.6 m), for a 1:8 slope as the minimum slope 230. Thus, in some examples the ally transponder 102 is tilted above the minimum slope 230 to reduce or eliminate ringing due to reflections of the transmitted return signal 122 from objects around the SA 216 being received at the ally transponder 102.

FIG. 3 depicts examples of components and operations that may be implemented in the system of FIG. 1. A block diagram 302 illustrates an example of components of the ally transponder 102, including a low noise amplifier (LNA) 314 coupled to the receive antenna 110, an optional delay device 328, a mixer 318 coupled to the LNA 314 and to a signal generator 320, and a bandpass filter (BPF) 326 configured to filter the output of the mixer 318 to generate the return signal 113, which is transmitted by the transmit antenna 114. In certain examples, the mixer 318 and the signal generator 320, and optionally the LNA 314, the BPF 326, or both, correspond to or are included in the return signal generator 112 of FIG. 1.

The LNA 314 is configured to amplify the received radar signal 111 from the receive antenna 110 to generate an amplified received radar signal 316. A carrier frequency of the received radar signal 111 and the amplified received radar signal 316 is illustrated as F_{C} + F_{DO}, where F_{C} indicates a carrier frequency (e.g., a frequency ramping) transmitted by the radar system 152 of the aircraft 150, and F_{DO} indicates the Doppler shift due to the speed of the aircraft 150 toward the ally transponder 102.

The optional delay device 328 is configured to receive a signal (e.g., the amplified received radar signal 316) as an input and to generate a delayed version of the signal as an output. The delayed version of the signal has the same or substantially the same waveform as the input signal, offset in time by a predetermined time delay. For example, the delay device 328 can include a delay line (e.g., a coaxial cable) having a length that is selected to cause a propagation delay for the signal that matches or substantially matches the predetermined time delay. Other mechanisms that can be included in the delay device 328 can include a surface-acoustic wave (SAW) delay line, a magnetostrictive delay line, an RF-over-fiber delay line, or an LC network, as illustrative, non-limiting examples.

The signal generator 320 is configured to generate a Doppler shift signal 322. In some examples, the Doppler shift signal 322 is a sinusoidal signal having a frequency F_{DS}, which corresponds to a Doppler shift that, when included in the transmitted return signal 122, is interpreted by the radar system 152 as a frequency shift due to a moving object, as described further below. According to some examples, the signal generator 320 includes a crystal-based oscillator (e.g., surface acoustic wave (SAW) or quartz resonator), a counter (e.g., a 32 MHz clock and down-counter to tonal frequency), one or more other types of oscillator, or a combination thereof.

The mixer 318 is configured to mix the amplified received radar signal 316 and the Doppler shift signal 322 to generate a mixed signal 324 having frequency F_{C} + F_{DO} ± F_{DS}, which includes the first component (F_{C} + F_{DO} + F_{DS}) mimicking a positive Doppler shift of a first object moving toward the aircraft 150, and the second component (F_{C} + F_{DO} - F_{DS}) mimicking a negative Doppler shift of a second object moving away from the aircraft 150.

The BPF 326 is configured to limit the bandwidth of the return signal 113. According to some examples, the BPF 326 operates in a similar manner as a roofing filter. In some examples, the BPF 326 passes a range of frequencies (e.g., a passband) that include the first component and the second component of the mixed signal 324, and attenuates frequencies outside of the passband.

The resulting return signal 113 output by the BPF 326 is transmitted by the transmit antenna 114 to generate the transmitted return signal 122 as a doublet Doppler, which includes at least the first component at a first frequency offset (e.g., F_{DS}) from a carrier frequency (e.g., F_{C} + F_{DO}) of the received radar signal 111, and a second component at a second frequency offset (e.g., -F_{DS}) from the carrier frequency of the received radar signal 111. The first frequency offset and the second frequency offset thus have matching amplitudes and opposite signs.

A graph 304 depicts an example of frequency as a function of time, and includes a center trace 360, an upper trace 362, and a lower trace 364. The center trace 360 corresponds to the carrier wave frequency (e.g., F_{C} + F_{DO}) of the received radar signal 111 and is illustrated as a triangle wave (e.g., in a frequency modulated continuous wave (FMCW) implementation) that varies linearly between a lower frequency F₁ and an upper frequency F₂. The upper trace 362 corresponds to the first component in the return signal 113 and is illustrated as a higher-frequency component (e.g., F_{C} + F_{DO} + F_{DS}) above the carrier wave that emulates, or has a signature of, an object approaching the aircraft 150. The lower trace 364 corresponds to the second component in the return signal 113 and is illustrated as a lower-frequency component (e.g., F_{C} + F_{DO} - F_{DS}) below the carrier wave that emulates, or has a signature of, an object travelling away from the aircraft 150. The magnitude of the difference in peak frequency between the center trace 360 and the upper trace 362 (e.g., |F_{DS}|), and the magnitude of the difference in peak frequency between the center trace 360 and the lower trace 364 (e.g., |-F_{DS}|), are the same or substantially the same and denoted ΔF. The delay between the center trace 360 and the upper trace 362 matches or substantially matches the delay between the center trace 360 and the lower trace 364, and is indicated as a difference between a first time 370 (e.g., a lower peak of the center trace 360) and a second time 372 (e.g., a lower peak of the upper trace 362 and the lower trace 364).

In some illustrative, non-limiting examples, the radar signal 120 has carrier frequency F_{C} in the Ku-band, such a frequency ramp in the range from 15.4 GHz to 16.7 GHz, and the ally transponder 102 is configured to emulate a pair of objects including a first object moving at 150 knots (77.17 m/s) toward the aircraft 150 and a second object moving at 150 knots away from the aircraft 150. The frequency F_{DS} of the Doppler shift signal 322 can be determined according to the equation F_{DS} = 2(v*cos(α))/λ, where v is the speed of the object, a is the angle between the direction of motion and the line between source and observer, and λ is the wavelength of the transmitted signal. At 16.1 GHz (e.g., the center of the frequency ramp from 15.4 GHz to 16.7 GHz), λ = 0.0187 meters. For a speed of 150 knots toward/away from the aircraft 150, v = 77.17 m/s, and α = 0. As a result, selection of F_{DS} ≈ 8.3 kHz causes the Doppler doublet in the transmitted return signal 122 to mimic the radar signature of a pair of objects moving at 150 knots in opposite directions.

In examples in which the ally transponder 102 includes the optional delay device 328, the predetermined time delay introduced in the output of the delay device 328 propagates through the remaining signal processing (e.g., mixing at the mixer 318 and filtering at the filter 326) and is included in the transmitted return signal 122. One effect of introducing the predetermined time delay is that the ally transponder 102 can remain detectable even within the radar blind range of the radar system 152. For example, the radar blind range corresponds to a minimum distance from a radar within which an object is too close to be reliably detected by the radar. To illustrate, when an object is within the blind range, the echo from the object returns before the radar receiver is able to detect it (e.g., due to transmitter leakage at the radar system 152 or windowing used during signal processing, as illustrative, non-limiting examples). By introducing the predetermined time delay in the transmitted return signal 122, the ally transponder 102 artificially lengthens the echo return time (e.g., increases the distance between the first time 370 and the second time 372) and emulates the pair of objects being outside of the blind range, even when the aircraft 150 is in the final stages of landing. The predetermined time delay introduced by the delay device 328 corresponds to a known biased offset than can be accounted for by the radar system 152.

A block diagram 308 illustrates an example of components of the aircraft 150 and includes a transmit antenna 340, a receive antenna 342, and the radar system 152 including the radar return analyzer 154. The transmit antenna 340 is configured to send the radar signal 120, and the receive antenna 342 is configured to receive the transmitted return signal 122 (in addition to return signals of other objects in the vicinity of the aircraft 150). The radar return analyzer 154 is configured to process the received return signals, and interprets the transmitted return signal 122 as a pair of objects co-located or substantially co-located at the position of the ally transponder 102, travelling at the same or substantially the same speed and in opposite directions (toward and away from the aircraft 150), and having the same or substantially the same RCS.

To illustrate, the radar return analyzer 154 can analyze frequency and phase differences between the transmitted radar signal 120 and each of the first component and the second component in the received return signal 122. Because the transmitted frequency varies linearly with time, the propagation delay between the aircraft 150 and the ally transponder 102 introduces a beat frequency (e.g., a consistent frequency offset) that is proportional to the distance between the aircraft 150 and the ally transponder 102. Thus, the radar return analyzer 154 estimates the location of the first object emulated by the upper trace 362 and the second object emulated by the lower trace 364 to both be at the position of the ally transponder 102. In examples in which the ally transponder 102 includes the delay device 328, the radar return analyzer 154 adjusts the calculations to remove the effect of the predetermined time delay from the location estimations. Doppler shifts observed across sequential ramps of the transmitted radar waveform indicate the first object is moving at a first speed (e.g., 150 knots) toward the aircraft 150 based on the frequency offset F_{DS} of the upper trace 362, and that the second object is moving at the first speed (e.g., 150 knots) away from the aircraft 150 based on the frequency offset -F_{DS} of the lower trace 364. Because each of the first component and the second component have the same or substantially the same signal strength, the radar return analyzer 154 estimates the first object and the second object to have the same RCS.

According to some examples, the radar system 152 is configured to use various criteria individually or in combination to detect the ally transponder 102. As illustrative non-limiting examples, one criterion that can be used by the radar system 152 to detect and/or identify an ally transponder 102 is detection of double Doppler signatures. For example, the radar system 152 detects an ally transponder 102 in response to detection of Doppler signatures with opposing signs at a speed that is within a first threshold of a predetermined speed, such as a predetermined speed of 150 knots and a first threshold of 3 knots, and appearing as two objects moving in opposite directions and each having a speed of 77.17 ± 1.53 m/s, in an illustrative, non-limiting example.

A second criterion that can be used by the radar system 152 to detect and/or identify an ally transponder 102, or to maintain tracking of a detected ally transponder 102, is based on detection of Doppler doublets having the same or substantially the same amplitude. In some examples, a track for the ally transponder 102 remains if the amplitudes of the Doppler doublets are indicative of two objects having speeds that are within a second threshold (e.g., 2 m/s) of each other.

A third criterion that can be used by the radar system 152 to detect and/or identify an ally transponder 102, or to maintain tracking of a detected ally transponder 102, is based on detection of Doppler doublets having the same or substantially the same RCS. In some examples, a track for the ally transponder 102 remains if the RCS of the Doppler doublets are indicative of two objects having radar cross-sections that are within a third threshold of each other, in units of decibels per square meter (dBsm).

A fourth criterion that can be used by the radar system 152 to detect and/or identify an ally transponder 102, or to maintain tracking of a detected ally transponder 102, is based on detection of Doppler doublets having similar or substantially similar locations. In some examples, a track for the ally transponder 102 remains if the loci of the doublets are within a fourth threshold distance of each other, such as within a sphere having a diameter equal to the fourth threshold distance, in units of meters.

An illustrative depiction 306 of the ally transponder 102 shows a difference in the lengths of antenna flaring that can be used to reduce or minimize leakage between the receiver (RX) and the transmitter (TX). In the illustrative depiction 306, the antenna flaring 310 of the receiver is longer than the antenna flaring 330 of the transmitter. In conjunction with the compact form factor of the ally transponder 102, the use of smaller antennas inherently offer a broader beam, which is beneficial for reduced size and also enhanced usefulness for navigation assistance. Amplification can be used with compact antennas to compensate for size.

Although a FMCW implementation is illustrated, in other examples the radar can be another type of radar, such as a pulse radar. Although a single mixing frequency F_{DS} is illustrated, in other examples two or more mixing frequencies can be used in a single transponder (e.g., to insert more than two components into the return signal).

Although a single optional delay device 328 is illustrated at the input to the mixer 318, in other examples one or more such delay devices may instead, or additionally, be included at the input to the LNA 314, at the input to the filter 326, at the input to the transmit antenna 114, or a combination thereof. Although the delay device 328 is described as introducing a predetermined time delay, in some examples the time delay may be adjustable or selectable, such as to operate in one or more preset configurations that are known to the radar analyzer 154.

Although FIG. 3 depicts a cost-effective example using primarily passive components, in other examples the ally transponder 102 may include one or more processors (e.g., digital signal processors (DSPs)) configured to generate the return signal 113, such as illustrated in FIG. 7. For example, in a digital implementation of the ally transponder 102, the received radar return signal 111 or the amplified received radar return signal 316 can be digitized and processed in the digital domain, which enables the mixing, filtering, amplification, delays, etc., to be implemented with increased adjustability as compared to using analog components. The output (e.g., a digital version of the return signal 113) can then be converted to analog for transmission. The components included into the return signal 113 can thus be adjustable and/or time-varying, such as by using different frequencies for different times of the day as an example.

According to some examples, different mixing frequencies can be selected for various vertiports. In some examples, a landing zone can include multiple ally transponders that can operate using the same, or different, frequencies. Additionally, or alternatively, temporal-based signaling can be used with specific patterns to further help identify the vertiports, enhance landing zone unique identification, or both. Multiple transponders can be configured in unique formations, enhancing robustness against potential multipath interference through template matching. In some examples, a sequence of frequencies and/or a pattern of frequency changes over time can be used to provide additional unique information for identifying individual ally transponders/landing zones. Other examples that can be implemented include specific polarization (e.g., horizonal, vertical), specific signal coding, or both.

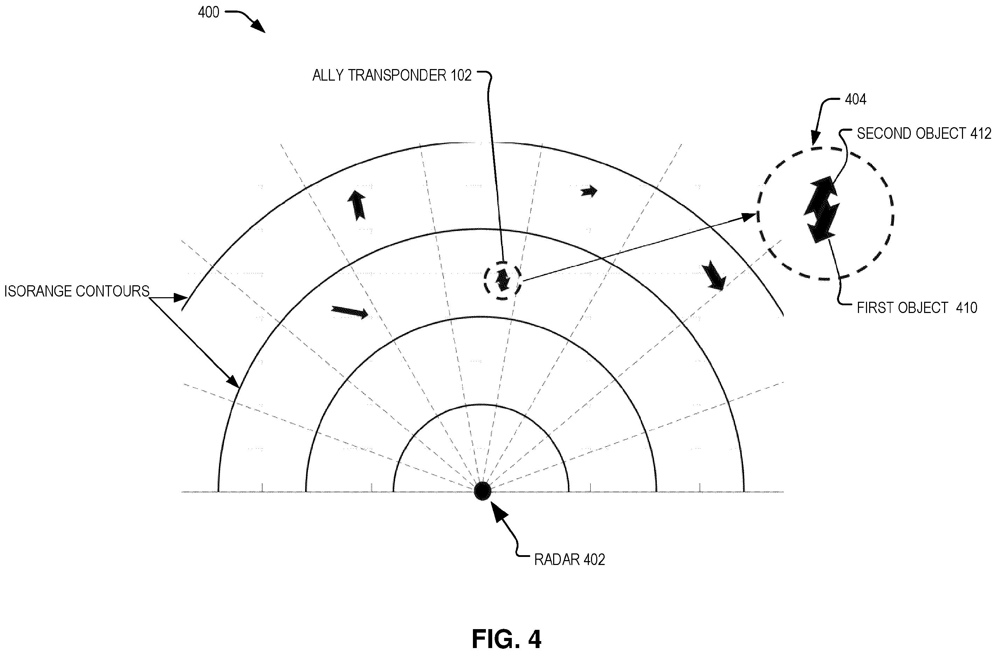

FIG. 4 depicts an illustrative, non-limiting example of a radar tracking diagram 400 for a radar source 402 and an ally transponder 102. In FIG. 4, each arrow represents a respective object, where the direction of an arrow indicates the heading of the object, the width of the arrow corresponds to the radar cross section (RCS) of the object, and the length of the arrow is proportional to the speed of the object. The use of arrows to represent objects is depicted as an illustrative example; in certain other examples, one or more other graphical conventions can be employed to represent clutter and moving objects at different azimuths or elevations relative to the selected reference frames.

A detail view 404 of the signature of the ally transponder 102 illustrates a first track that is inbound (down arrow) to the radar source 402 and that corresponds to a first object 410 moving toward the radar source 402, and a second track that is outbound (up arrow) from the radar source 402 and that corresponds to a second object 412 moving away from the radar source 402. The first object 410 can correspond to the first component of the return signal 113 (e.g., the upper trace 362 of FIG. 3), and the second object 412 can correspond to the second component of the return signal 113 (e.g., the lower trace 364 of FIG. 3). In this and certain other examples, the first object 410 and the second object 412 are at the same or substantially the same location, and have the same or substantially the same speed (arrow length) and radar cross section (arrow width), providing an ally transponder signature that can be easily detected by the radar return analyzer 154 of FIG. 1 and distinguished from ground clutter.

In examples in which the ally transponder 102 incorporates analog or digital delay lines (e.g., the delay device 328 of FIG. 3), the locations of the first object 410 and the second object 412 are along the same bearing as the ally transponder 102 but at a range that is offset from the actual range to the ally transponder 102 by a known relative distance that corresponds to the predetermined time delay introduced by the delay lines. Thus, the ally transponder 102 may be physically within the blind range of the radar 402, such as during the final stage of landing, but is still detectable as the pair of objects 410 and 412 appearing to be at the illustrated distance from the ally transponder 102. Upon detecting that the first object 410 and the second object 412 are an ally transponder signature, the radar system compensates for the relative distance offset to determine the physical location of the ally transponder 102.

FIG. 5 depicts examples of an aircraft 150 and its corresponding DAA field of view, in a side view 500 and an overhead view 502, which can be accommodated by the ally transponder 102 in the system 100 of FIG. 1.

The side view 500 illustrates elevation coverage that includes a first portion 510 that spans from the longitudinal axis of the aircraft 150 to a first angle α above the longitudinal axis, and a second portion 512 that spans from the longitudinal axis of the aircraft 150 to a second angle β below the longitudinal axis. The overhead view 502 illustrates azimuth coverage that includes a first portion 520A and a second portion 520B that overlap in an overlap portion 522 in front of the aircraft 150. According to some examples, the first portion 510 and the second portion 512 of the elevation coverage, and the first portion 520A, the second portion 520B, and the overlap portion 522 of the azimuth coverage could be adjusted based on applicable standards or guidelines, such as similar to an RTCA specification for DAA systems (e.g., RTCA DO-366), as an illustrative, non-limiting example.

In certain examples, the elevation coverage is extended further below the longitudinal axis, such as in a third portion 514 that spans from the longitudinal axis to a third angle γ below the longitudinal axis, to provide enhanced coverage and accuracy for assisted navigation, such as for landing, using ally transponders 102. The extended elevation coverage thus illustrates a further increased functionality of DAA airborne radars in providing landing assistance.

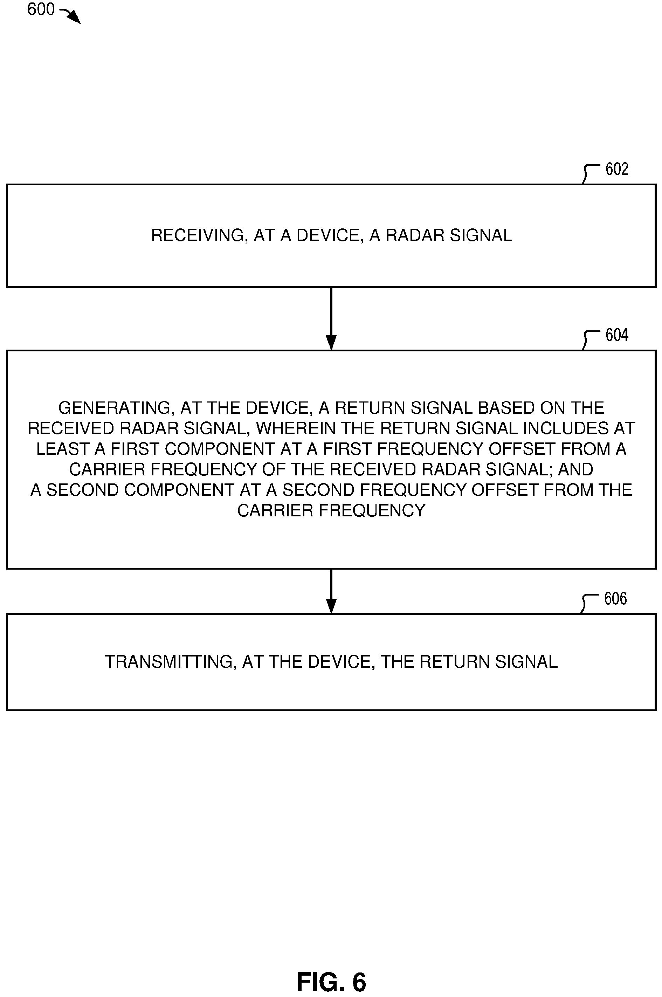

FIG. 6 is a flowchart illustrating an example of a method 600 of operating an ally transponder. At block 602, method 600 includes receiving, at a device, a radar signal. For example, the device can include or correspond to an ally transponder 102 that receives the radar signal 120 via the receive antenna 110.

At block 604, the method 600 includes generating, at the device, a return signal based on the received radar signal, where the return signal includes at least a first component at a first frequency offset from a carrier frequency of the received radar signal and a second component at a second frequency offset from the carrier frequency. For example, the return signal generator 112 of the ally transponder 102 generates the return signal 113 based on the received radar signal 111.

According to some examples, generating the return signal includes mixing the received radar signal with a mixing signal, and the mixing signal includes a component having a frequency that matches or substantially matches the first frequency offset and the second frequency offset. For example, referring to FIG. 3, the mixer 318 mixes the amplified received radar signal 316 with the Doppler shift signal 322 having the frequency F_{DS} and generates the mixed signal 324, and the mixed signal 324 is filtered by the BPF 326 to generate the return signal 113. The return signal 113 has a first component (e.g., F_{C} + F_{DO} + F_{DS}, corresponding to the upper trace 362) that is offset from the carrier frequency (e.g., F_{C} + F_{DO}) of the received radar signal 111 by a first frequency offset (e.g., F_{DS}). The return signal 113 also has a second component (e.g., F_{C} + F_{DO} - F_{DS}, corresponding to the lower trace 364) that is offset from the carrier frequency (e.g., F_{C} + F_{DO}) of the received radar signal 111 by a second frequency offset (e.g., -F_{DS}).

In some illustrative examples, the first component emulates a first Doppler signature of a first object (e.g., the first object 410 of FIG. 4) traveling toward a source of the radar signal at a first speed, and the second component emulates a second Doppler signature of a second object (e.g., the second object 412) traveling away from the source of the radar signal at a second speed that matches or substantially matches the first speed. In certain examples, the first frequency offset and the second frequency offset have matching magnitudes and opposite signs. According to some examples, the first frequency offset and the second frequency offset are within a threshold range from the carrier frequency. In some examples, generating the return signal also includes introducing a predetermined time delay that emulates a distance offset of the first object and the second object from a location of the device. For example, the delay device 328 introduces the predetermined time delay that causes the transmitted return signal 122 to emulate a location that is outside of a radar blind range.

At block 606, the method 600 includes transmitting, at the device, the return signal. For example, the ally transponder 102 transmits the return signal 113 via the transmit antenna 114 to generate the transmitted return signal 122.

According to some examples, the return signal is generated and transmitted to indicate a landing location for an autonomous aircraft. According to some examples, the combination of the first component and the second component operate as a unique identifier corresponding to the landing location. In some examples, the device corresponds to a transponder, such as the ally transponder 102, and the return signal includes a pattern that uniquely identifies the transponder.

FIG. 7 is a block diagram of a computing environment 700 including a computing device 710 configured to support features of computer-implemented methods and computer-executable program instructions (or code) according to the present disclosure. For example, the computing device 710, or portions thereof, is configured to execute instructions to initiate, perform, or control one or more operations described with reference to FIGS. 1-6. In some examples, the computing device 710 corresponds to the ally transponder 102, the radar system 152, the navigation system 156, or a combination thereof.

The computing device 710 includes the one or more processors 720. The one or more processors 720 are configured to communicate with system memory 730, one or more storage devices 750, one or more input/output interfaces 740, one or more communications interfaces 760, or any combination thereof. The system memory 730 includes volatile memory devices (e.g., random access memory (RAM) devices), nonvolatile memory devices (e.g., read-only memory (ROM) devices, programmable read-only memory, and flash memory), or both. The system memory 730 stores an operating system 732, which may include a basic input/output system for booting the computing device 710 as well as a full operating system to enable the computing device 710 to interact with users, other programs, and other devices. The system memory 730 stores system (program) data 738, such as data corresponding to features associated with generating the return signal, or identifying a location of an ally transformer based on a received return signal.

The system memory 730 includes one or more applications 734 (e.g., sets of instructions 736) executable by the one or more processors 720. As an example, the one or more applications 734 include instructions executable by the one or more processors 720 to initiate, control, or perform one or more operations described with reference to FIGS. 1-6. To illustrate, the one or more applications 734 include instructions executable by the one or more processors 720 to initiate, control, or perform one or more operations described with reference to the return signal generator 112, the radar system 152, the navigation system 156, or a combination thereof.

The system memory 730 includes a non-transitory, computer readable medium storing the instructions that, when executed by the one or more processors 720, cause the one or more processors 720 to perform operations as described above.

The one or more storage devices 750 include nonvolatile storage devices, such as magnetic disks, optical disks, or flash memory devices. In some examples, the storage devices 750 include both removable and non-removable memory devices. The storage devices 750 are configured to store an operating system, images of operating systems, applications (e.g., one or more of the applications 734), and program data (e.g., the program data 738). In certain examples, the system memory 730, the storage devices 750, or both, include tangible computer-readable media. In some examples, one or more of the storage devices 750 are external to the computing device 710.

The one or more input/output interfaces 740 enable the computing device 710 to communicate with one or more input/output devices 770 to facilitate user interaction. For example, the one or more input/output interfaces 740 can include a display interface, an input interface, or both. For example, the input/output interface 740 is adapted to receive input from a user, to receive input from another computing device, or a combination thereof. The input/output interface 740 may conform to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). The input/output devices 770 may include one or more user interface devices and displays, including some combination of buttons, keyboards, pointing devices, displays, speakers, microphones, touch screens, and other devices.

The one or more processors 720 are configured to communicate with one or more devices (or controllers) 780 via the one or more communications interfaces 760. For example, the one or more communications interfaces 760 can include a network interface.

A non-transitory, computer readable medium can store instructions that, when executed by one or more processors, cause the one or more processors to initiate, perform, or control operations to perform part or all of the functionality described above. For example, the instructions may be executable to implement one or more of the operations or methods of FIGS. 1-7. Part or all of one or more of the operations or methods of FIGS. 1-7 may be implemented by one or more processors (e.g., one or more central processing units (CPUs), one or more graphics processing units (GPUs), one or more neural processing units (NPUs), one or more digital signal processors (DSPs)) executing instructions, by dedicated hardware circuitry, or any combination thereof.

Particular features of the disclosure are described below in a first set of interrelated Examples:
According to Example 1, a device includes a receive antenna configured to receive a radar signal; a return signal generator configured to generate a return signal based on the received radar signal, wherein the return signal includes at least: a first component at a first frequency offset from a carrier frequency of the received radar signal; and a second component at a second frequency offset from the carrier frequency; and a transmit antenna configured to transmit the return signal.

Example 2 includes the device of Example 1, wherein the first frequency offset and the second frequency offset have matching magnitudes and opposite signs.

Example 3 includes the device of Example 1 or Example 2, wherein the receive antenna, the return signal generator, and the transmit antenna are included in a transponder to indicate a landing location for an autonomous aircraft.

Example 4 includes the device of Example 3, wherein the received radar signal corresponds to a detect and avoid (DAA) airborne radar, and wherein the return signal emulates a first object traveling toward the DAA airborne radar at a first speed, and a second object at a same location as the first object and traveling away from the DAA airborne radar at a second speed that matches or substantially matches the first speed.

Example 5 includes the device of Example 4, wherein the return signal emulating the first object and the second object enables the DAA airborne radar to distinguish the transponder from ground clutter.

Example 6 includes the device of any of Examples 3 to 5, wherein the combination of the first component and the second component operate as a unique identifier corresponding to the landing location.

Example 7 includes the device of any of Examples 3 to 6, wherein the return signal includes a pattern that uniquely identifies the transponder.

Example 8 includes the device of any of Examples 1 to 7, wherein the first frequency offset and the second frequency offset are within a threshold range from the carrier frequency.

Example 9 includes the device of any of Examples 1 to 8, wherein the first component emulates a first Doppler signature of a first object traveling toward a source of the radar signal at a first speed, and wherein the second component emulates a second Doppler signature of a second object traveling away from the source of the radar signal at a second speed that matches or substantially matches the first speed.

Example 10 includes the device of any of Examples 1 to 9, wherein the return signal generator includes a mixer configured to mix the received radar signal with a mixing signal to generate the return signal, the mixing signal including a component having a frequency that matches or substantially matches the first frequency offset and the second frequency offset.

Example 11 includes the device of Example 10, wherein the return signal generator further includes an amplifier coupled to the mixer and configured to amplify the return signal, a signal generator configured to generate the mixing signal, and a filter configured to filter the return signal.

According to Example 12, a system includes the device of any of claims 1 to 11; and an aircraft configured to transmit the radar signal, the aircraft further including a radar return analyzer configured to identify a landing location transponder based on detection of the first component and the second component in the return signal.

According to Example 13, a method includes receiving, at a device, a radar signal; generating, at the device, a return signal based on the received radar signal, wherein the return signal includes at least: a first component at a first frequency offset from a carrier frequency of the received radar signal; and a second component at a second frequency offset from the carrier frequency; and transmitting, at the device, the return signal.

Example 14 includes the method of Example 13, wherein the first frequency offset and the second frequency offset have matching magnitudes and opposite signs.

Example 15 includes the method of Example 13 or Example 14, wherein the return signal is generated and transmitted to indicate a landing location for an autonomous aircraft.

Example 16 includes the method of Example 15, wherein the combination of the first component and the second component operate as a unique identifier corresponding to the landing location.

Example 17 includes the method of Example 15 or Example 16, wherein the device corresponds to a transponder, and wherein the return signal includes a pattern that uniquely identifies the transponder.

Example 18 includes the method of any of Examples 13 to 17, wherein the first frequency offset and the second frequency offset are within a threshold range from the carrier frequency.

Example 19 includes the method of any of Examples 13 to 18, wherein the first component emulates a first Doppler signature of a first object traveling toward a source of the radar signal at a first speed, and wherein the second component emulates a second Doppler signature of a second object traveling away from the source of the radar signal at a second speed that matches or substantially matches the first speed.

Example 20 includes the method of Example 19, wherein generating the return signal includes introducing a predetermined time delay that emulates a distance offset of the first object and the second object from a location of the device.

Example 21 includes the method of any of Examples 13 to 20, wherein generating the return signal includes mixing the received radar signal with a mixing signal, the mixing signal including a component having a frequency that matches or substantially matches the first frequency offset and the second frequency offset.

According to Example 22, a device includes a memory configured to store instructions; and a processor configured to execute the instructions to perform the method of any of Examples 13 to 21.

According to Example 23, a non-transitory, computer-readable medium stores instructions that, when executed by one or more processors, cause the one or more processors to perform the method of any of Examples 13 to 21.

According to Example 24, an apparatus includes means for carrying out the method of any of Examples 13 to 21.

According to Example 25, a non-transitory computer-readable medium includes instructions that, when executed by one or more processors, cause the one or more processors to perform operations including: receiving a radar signal; generating a return signal based on the received radar signal, wherein the return signal includes at least a first component at a first frequency offset from a carrier frequency of the received radar signal, and a second component at a second frequency offset from the carrier frequency; and transmitting the return signal.

According to Example 26, a radar system includes a transmit antenna configured to transmit a radar signal; a receive antenna configured to receive a return signal that corresponds to the radar signal and that includes a first component at a first frequency offset from a carrier frequency of the radar signal and a second component at a second frequency offset from the carrier frequency; and a radar return analyzer configured to identify a landing location, based at least on detection of the first component and the second component.

According to Example 27, an aircraft includes a radar system that includes a transmit antenna configured to transmit a radar signal; a receive antenna configured to receive a return signal that corresponds to the radar signal and that includes a first component at a first frequency offset from a carrier frequency of the radar signal and a second component at a second frequency offset from the carrier frequency; and a radar return analyzer configured to identify a landing location, based at least on detection of the first component and the second component; and the aircraft also includes a navigation system coupled to the radar system and configured to generate a navigation instruction based on the identified landing location.

Example 28 includes the aircraft of Example 27, wherein the radar system corresponds to a detect and avoid (DAA) radar, wherein the return signal is received from a transponder and emulates a first object traveling toward the aircraft at a first speed and a second object at a same location as the first object and traveling away from the aircraft at a second speed that matches or substantially matches the first speed, and wherein the return signal enables the radar return analyzer to distinguish the transponder from ground clutter.

The illustrations of the examples described herein are intended to provide a general understanding of the structure of the various examples. The examples are not intended to serve as a complete description of all of the elements and features of apparatus and systems that utilize the structures or methods described herein. Many other examples may be apparent to those of skill in the art upon reviewing the disclosure. Other examples may be utilized and derived from the disclosure, such that structural and logical substitutions and changes may be made without departing from the scope of the claims. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific examples shown. This disclosure is intended to cover any and all subsequent adaptations or variations of various examples. Combinations of the above examples, and other examples not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single example for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

## Claims

1. A device (102) comprising:
a receive antenna (110) configured to receive a radar signal (120);
a return signal generator (112) configured to generate a return signal (113) based on the received radar signal, wherein the return signal includes at least:
a first component (362) at a first frequency offset from a carrier frequency of the received radar signal; and
a second component (364) at a second frequency offset from the carrier frequency; and
a transmit antenna (114) configured to transmit the return signal.

2. The device of claim 1, wherein the first frequency offset and the second frequency offset have matching magnitudes and opposite signs.

3. The device of claim 1 or 2, wherein:
the receive antenna, the return signal generator, and the transmit antenna are included in a transponder configured to indicate a landing location (212) for an autonomous aircraft (150).

4. The device of claim 3, wherein:
the received radar signal corresponds to a detect and avoid (DAA) airborne radar, and wherein the return signal emulates a first object (410) traveling toward the DAA airborne radar at a first speed, and a second object (412) at a same location as the first object and traveling away from the DAA airborne radar at a second speed that substantially matches the first speed; and, optionally,
the return signal emulating the first object and the second object enables the DAA airborne radar to distinguish the transponder from ground clutter.

5. The device of any of claims 3 or 4, wherein the combination of the first component and the second component operate as a unique identifier corresponding to the landing location.

6. The device of any of claims 3 to 5, wherein the return signal includes a pattern that uniquely identifies the transponder.

7. The device of any of claims 1 to 6, wherein the first frequency offset and the second frequency offset are within a threshold range from the carrier frequency.

8. The device of any of claims 1 to 7, wherein the first component emulates a first Doppler signature of a first object traveling toward a source of the radar signal at a first speed, and wherein the second component emulates a second Doppler signature of a second object traveling away from the source of the radar signal at a second speed that substantially matches the first speed.

9. The device of any of claims 1 to 8, wherein:
the return signal generator includes a mixer (328) configured to mix the received radar signal with a mixing signal (322) to generate the return signal, the mixing signal including a component having a frequency (F_{DS}) that substantially matches the first frequency offset and the second frequency offset and, optionally,
the return signal generator further includes an amplifier (314) coupled to the mixer and configured to amplify the return signal, a signal generator (320) configured to generate the mixing signal, and a filter (326) configured to filter the return signal.

10. A radar system (152) including the device of any preceding claim or an aircraft (150) including such a radar system (152).

11. A method (600) comprising:
receiving (602), at a device (102), a radar signal (120);
generating (604), at the device, a return signal (113) based on the received radar signal, wherein the return signal includes at least:
a first component (362) at a first frequency offset from a carrier frequency of the received radar signal; and
a second component (364) at a second frequency offset from the carrier frequency; and
transmitting (606), at the device, the return signal.

12. The method of claim 11, wherein the first frequency offset and the second frequency offset have matching magnitudes and opposite signs.

13. The method of claim 11 or 12, wherein:
the return signal is generated and transmitted to indicate a landing location (212) for an autonomous aircraft (150) and, optionally,
the combination of the first component and the second component operate as a unique identifier corresponding to the landing location.

14. The method of any of claims 11 to 13, wherein:
the first component emulates a first Doppler signature of a first object (410) traveling toward a source of the radar signal at a first speed, and wherein the second component emulates a second Doppler signature (412) of a second object traveling away from the source of the radar signal at a second speed that substantially matches the first speed and, optionally,
generating the return signal includes introducing a predetermined time delay that emulates a distance offset of the first object and the second object from a location of the device.

15. The method of any of claims 11 to 14, wherein generating the return signal includes mixing the received radar signal with a mixing signal (322), the mixing signal including a component having a frequency (F_{DS}) that substantially matches the first frequency offset and the second frequency offset.
